# EUROPEAN PATENT APPLICATION

(11) **EP 4 654 375 A1**
(43) Date of publication of application: **26.11.2025**
(21) Application number: 24852045.4
(22) Date of filing: 24.06.2024
(51) Int. Cl.: H01M 50/586, H01M 50/533, H01M 10/04, H01M 50/213, H01M 50/249

(54) **CYLINDRICAL BATTERY CELL, AND BATTERY PACK AND VEHICLE COMPRISING SAME**

(30) Priority: 09.08.2023 KR 20230104435
(71) Applicant: LG Energy Solution, Ltd., Seoul 07335 (KR)
(72) Inventor: LEE, Ha-Na, Daejeon 34122 (KR)
(74) Representative: Goddar, Heinz J.
(86) International application number: PCT/KR2024/008720
(87) International publication number: WO 2025/033689

(57) **Abstract**

Disclosed are a cylindrical battery cell, and a battery pack and a vehicle including the same.

A cylindrical battery cell according to an embodiment of the present disclosure includes an electrode assembly having a structure in which a positive electrode plate provided with a positive electrode tab, a negative electrode plate provided with a negative electrode tab, and a separator interposed between the positive electrode plate and the negative electrode plate are wound in one direction, and having a center hole formed therein; a cylindrical battery can configured to store the electrode assembly with an electrolyte injected thereinto; and an insulator for electrical insulation having a central opening formed therein and disposed on a side of the negative electrode tab, wherein at least a part of the negative electrode tab is configured to rotate according to a change in the electrode assembly during charging and discharging.

## Description

### TECHNICAL FIELD

The present application claims priority to Korean Patent Application No. 10-2023-0104435 filed on August 09, 2023 in the Republic of Korea, the disclosures of which are incorporated herein by reference.

The present disclosure relates to a cylindrical battery cell, and a battery pack and a vehicle including the same, and more specifically, it relates to a cylindrical battery cell that avoids a short circuit by preventing collapse of the shape of an electrode assembly, and a battery pack and a vehicle including the same.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices.

These secondary batteries are attracting attention as a new energy source for improving eco-friendliness and energy efficiency because of the primary advantage of dramatically reducing the use of fossil fuels and another advantage of not generating byproducts resulting from energy use.

Current secondary batteries widely used include lithium-ion batteries, lithium-polymer batteries, nickel-cadmium batteries, nickel-hydrogen batteries, nickel-zinc batteries, and the like. The operating voltage of this unit secondary battery cell is approximately 2.5V to 4.5V.

Therefore, when an output voltage higher than this is required, a battery module or battery pack is configured by connecting a plurality of battery cells in series. In addition, a battery module or a battery pack may be configured by connecting multiple battery cells in parallel depending on the charge/discharge capacity required therefor. Accordingly, the number of battery cells included in the battery module or battery pack and the electrical connection type thereof may be set in various ways depending on at least one of the required output voltage or charge/discharge capacity.

Meanwhile, as a type of secondary battery cell, cylindrical, prismatic, and pouch-type battery cells are known. In the case of a cylindrical battery cell, a separator, which is an insulator, is interposed between a positive electrode plate and a negative electrode plate, and this is wound to form a jellyroll-type electrode assembly, which is then inserted into a battery can together with an electrolyte to form a battery.

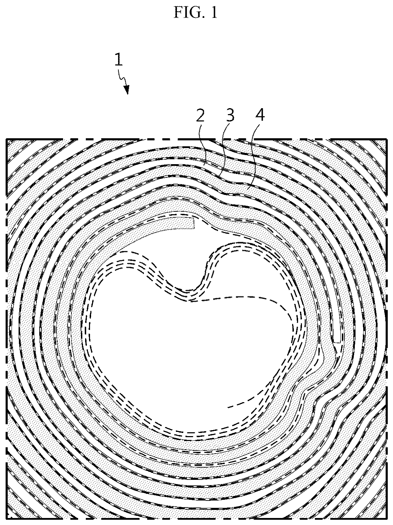

FIG. 1 is a drawing illustrating changes in lengths of both side plates of an electrode assembly and a negative electrode plate when the cylindrical battery cell is repeatedly charged and discharged.

In general, if the cylindrical battery cell is repeatedly charged and discharged, the positive electrode plate 2 or the negative electrode plate 4 of the electrode assembly 1 repeatedly contracts and relaxes, so that the length of the positive electrode plate 2 or the negative electrode plate 4 increases.

However, since the electrode assembly 1 is stored inside the cylindrical battery can (not shown in FIG. 1) (for example, made of metal), even if the length of the positive electrode plate 2 or the negative electrode plate 4 increases, it is unable to be deformed outside the battery can.

Therefore, as shown in FIG. 1, the positive electrode plate 2, the separator 3, or the negative electrode plate 4 is deformed toward the center of the electrode assembly 1. However, if the positive electrode plate 2, the separator 3, or the negative electrode plate 4 is folded toward the center of the electrode assembly 1 so that the shape of the electrode assembly 1 collapses, a short circuit may occur inside the cell, which may cause stability problems.

### DISCLOSURE

### Technical Problem

The present disclosure has been designed to solve the problems of the related art, and therefore the present disclosure is directed to providing a cylindrical battery cell capable of preventing the collapse of the shape of the electrode assembly during repeated charging and discharging of the cylindrical battery cell, and a battery pack and a vehicle including the same.

In addition, the present disclosure provides a cylindrical battery cell capable of preventing a short circuit in the cylindrical battery cell according thereto, and a battery pack and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a cylindrical battery cell including: an electrode assembly having a structure in which a positive electrode plate provided with a positive electrode tab, a negative electrode plate provided with a negative electrode tab, and a separator interposed between the positive electrode plate and the negative electrode plate are wound in one direction, and having a center hole formed therein; a cylindrical battery can configured to store the electrode assembly with an electrolyte injected thereinto; and an insulator having a central opening formed therein and disposed on the side of the negative electrode tab so as to be coupled to the electrode assembly, wherein at least a part of the negative electrode tab is configured to rotate according to a change in the electrode assembly during charging and discharging.

In an embodiment, the negative electrode tab may include: a first negative electrode tab fixed to the battery can; a second negative electrode tab positioned in the center hole of the electrode assembly, coupled to the electrode assembly, and configured to rotate relative to the first negative electrode tab; and a coupling shaft coupled to the first negative electrode tab and the second negative electrode tab so that the second negative electrode tab is rotatable.

In an embodiment, the second negative electrode tab may rotate inside the central opening of the insulator.

In an embodiment, the second negative electrode tab may rotate as a length of at least one of the positive electrode plate and the negative electrode plate increases due to charging and discharging.

In an embodiment, the first negative electrode tab may include: a horizontal fixing tab formed in a horizontal direction, based on an arrangement state of the battery can; and a vertical fixing tab configured to extend to be bent from the horizontal fixing tab and positioned between an outermost side of the electrode assembly and the battery can.

In an embodiment, the second negative electrode tab may include: a horizontal rotation tab formed in a horizontal direction, based on an arrangement state of the battery can; and a vertical rotation tab configured to extend to be bent from the horizontal rotation tab and is coupled to the electrode assembly in the center hole of the electrode assembly.

In an embodiment, an inner groove may be formed on an inner side of the second negative electrode tab, and an outer protrusion may be formed on an outer surface of the coupling shaft so as to come into contact with the inner groove and move in only one direction along the inner groove.

In an embodiment, the inner groove may include: a first line formed to be inclined from an arbitrary point; and a second line formed to be inclined toward the first line from an opposite point of the arbitrary point so as to meet the first line, wherein an inclined angle of the first line and an inclined angle of the second line may be different from each other.

In an embodiment, the inner groove may include: a first line formed to be inclined from an arbitrary point; and a second line formed to be inclined toward the first line from an opposite point of the arbitrary point so as to meet the first line, wherein a length of the first line and a length of the second line may be different from each other.

In an embodiment, an inner groove may be formed on an inner side of the central opening of the insulator, and the second negative electrode tab may be configured to come into contact with the inner groove and move in only one direction along the inner groove.

In an embodiment, the inner groove may include: a first line formed to be inclined from an arbitrary point; and a second line formed to be inclined toward the first line from an opposite point of the arbitrary point so as to meet the first line, wherein an inclined angle of the first line and an inclined angle of the second line may be different from each other.

In an embodiment, the inner groove may include: a first line formed to be inclined from an arbitrary point; and a second line formed to be inclined toward the first line from an opposite point of the arbitrary point so as to meet the first line, wherein a length of the first line and a length of the second line may be different from each other.

According to another aspect of the present disclosure, there may be provided a battery pack including at least one cylindrical battery cell described above, and there may be provided a vehicle including at least one cylindrical battery cell described above.

### Advantageous Effects

The embodiments of the present disclosure have the effect of preventing the shape of the electrode assembly from collapsing during repeated charging and discharging of the cylindrical battery cell by configuring at least a portion of the negative electrode tab to rotate.

In addition, there is the effect of preventing the occurrence of a short circuit in the cylindrical battery cell according thereto.

However, the effects obtainable from the present disclosure are not limited to the above-mentioned effects, and other effects not mentioned above will be clearly understood by those skilled in the art from the description of the invention described below.

### DESCRIPTION OF DRAWINGS

FIG. 1 is a drawing illustrating changes in lengths of both side plates of an electrode assembly and a negative electrode plate when a conventional cylindrical battery cell is repeatedly charged and discharged.
FIG. 2 is a cross-sectional view of a cylindrical battery cell according to a first embodiment of the present disclosure.
FIG. 3 is a schematically perspective view illustrating a coupling shaft coupled to a first negative electrode tab and a second negative electrode tab of a negative electrode tab in a cylindrical battery cell according to a first embodiment of the present disclosure.
FIG. 4 is a drawing illustrating the state in which the second negative electrode tab rotates relative to the first negative electrode tab in the negative electrode tab in FIG. 3.
FIG. 5 is a schematically perspective view of a first negative electrode tab and a second negative electrode tab of a negative electrode tab in a cylindrical battery cell according to a second embodiment of the present disclosure.
FIG. 6 is a schematically perspective view of a coupling shaft of a negative electrode tab in a cylindrical battery cell according to a second embodiment of the present disclosure.
FIG. 7 is a schematically perspective view of a coupling shaft coupled to a first negative electrode tab and a second negative electrode tab of a negative electrode tab in a cylindrical battery cell according to a second embodiment of the present disclosure.
FIG. 8 is a drawing illustrating the state in which a second negative electrode tab of a negative electrode tab rotates relative to a first negative electrode tab inside a central opening of an insulator in a cylindrical battery cell according to a second embodiment of the present disclosure.
FIG. 9 is a drawing illustrating an insulator having an inner groove formed in a central opening of a cylindrical battery cell according to a third embodiment of the present disclosure.
FIG. 10 is a schematically perspective view illustrating the state in which a negative electrode tab is coupled to an inner groove of a central opening of an insulator in a cylindrical battery cell according to a third embodiment of the present disclosure.
FIG. 11 is a drawing illustrating the state in which a second negative electrode tab rotates relative to a first negative electrode tab in the negative electrode tab in FIG. 10.
FIG. 12 is a drawing illustrating an insulator according to a modified embodiment of the insulator in FIG. 9.
FIG. 13 is a drawing schematically illustrating the configuration of a battery pack including a cylindrical battery cell according to each embodiment of the present disclosure.
FIG. 14 is a drawing illustrating a vehicle including a battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

The expression "one element is 'coupled' or 'fastened' to the other element" should be understood that the elements may be directly coupled or fastened to each other, and that the elements may be indirectly coupled or fastened to each other through another element.

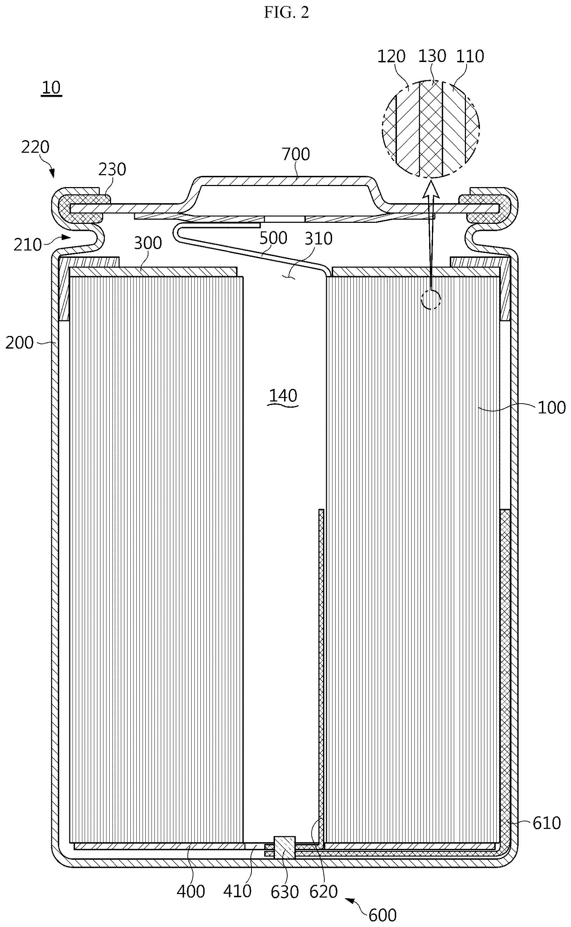

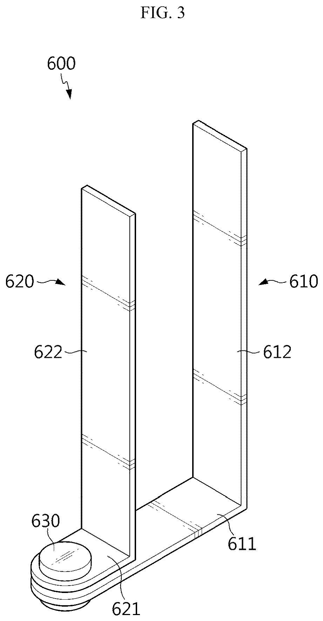

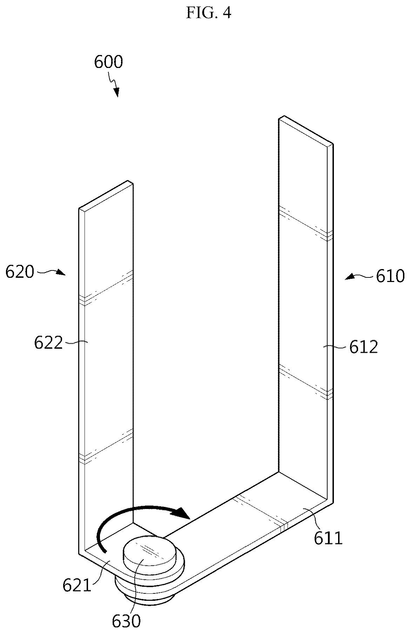

FIG. 2 is a cross-sectional view of a cylindrical battery cell according to a first embodiment of the present disclosure, FIG. 3 is a schematically perspective view illustrating a coupling shaft coupled to a first negative electrode tab and a second negative electrode tab of a negative electrode tab in a cylindrical battery cell according to a first embodiment of the present disclosure, and FIG. 4 is a drawing illustrating the state in which the second negative electrode tab rotates relative to the first negative electrode tab in the negative electrode tab in FIG. 3.

Referring to FIG. 2, a cylindrical battery cell 10 according to the first embodiment of the present disclosure includes an electrode assembly 100, a battery can 200, and an insulator 400.

Referring to FIG. 2, the electrode assembly 100 has a structure in which a positive electrode plate 110 provided with a positive electrode tab 500, a negative electrode plate 120 provided with a negative electrode tab 600, and a separator 130 interposed between the positive electrode plate 110 and the negative electrode plate 120 are wound in one direction. In addition, a center hole 140 may be formed in a jellyroll type at the center of the electrode assembly 100.

For example, the electrode assembly 100 may be manufactured by winding a laminate obtained by sequentially stacking the negative electrode plate 120, the separator 130, the positive electrode plate 110, and the separator 130 at least once. Here, the positive electrode plate 110 and the negative electrode plate 120 may be formed in a sheet shape.

That is, the electrode assembly 100 applied to the present embodiment may be a winding-type electrode assembly 100. In this case, an additional separator (not shown) may be provided on the outer surface of the electrode assembly 100 for insulation from the battery can 200. That is, the electrode assembly 100 may have a winding structure well known in the related art without limitation.

The positive electrode plate 110 has a positive electrode active material applied on one or both sides thereof. Here, a positive electrode tab 500 is provided in the positive electrode plate 110. In addition, the negative electrode plate 120 has a negative electrode active material applied to one or both sides thereof. Here, a negative electrode tab 600 is provided in the negative electrode plate 120. The negative electrode tab 600 will be described in more detail later.

In addition, any active material known in the art may be used for the positive electrode active material coated on the positive electrode plate 110 and the negative electrode active material coated on the negative electrode plate 120 without limitation.

The separator 130 may be configured as a single porous polymer film, for example, a porous polymer film manufactured from a polyolefin polymer such as an ethylene homopolymer, a propylene homopolymer, an ethylene/butene copolymer, an ethylene/hexene copolymer, an ethylene/methacrylate copolymer, or the like, or as a stack thereof.

As another example, a conventional porous nonwoven fabric, such as a nonwoven fabric made of high-melting-point glass fiber, polyethylene terephthalate fiber, and the like, may be used for the separator 130.

The separator 130 may include a coating layer of inorganic particles on at least one surface thereof. In addition, the separator 130 itself may be formed of a coating layer of inorganic particles. The particles constituting the coating layer may have a structure in which they are combined with a binder so that an interstitial volume exists between adjacent particles.

Referring to FIG. 2, the electrode assembly 100 is stored in the battery can 200 and an electrolyte is injected thereinto. For example, the battery can 200 may be formed in a cylindrical shape such that the electrode assembly 100 is stored inside the battery can 200 and may be electrically connected to the negative electrode plate 120 of the electrode assembly 100. Accordingly, the battery can 200 may have the same polarity as the negative electrode plate 120, i.e., a negative polarity.

Here, the diameter of the battery can 200 is formed to be greater than the diameter of the electrode assembly 100. In addition, the battery can 200 may be made of a conductive material such as metal. The battery can 200 may be made of conductive metal, such as aluminum, steel, stainless steel, or the like, but is not limited thereto.

An insulator 400 is coupled to the electrode assembly 100 for electrical insulation. In FIG. 2, the insulator 400 is coupled to the bottom of the electrode assembly 100. In addition, an insulator 300 is coupled to the electrode assembly 100 for electrical insulation. In FIG. 2, the insulator 300 is coupled to the top of the electrode assembly 100.

The insulator 300 is disposed on the side of the positive electrode tab 500 and connected to the electrode assembly 100, and the insulator 400 is disposed on the side of the negative electrode tab 600 and connected to the electrode assembly 100. Hereinafter, the insulator 400 disposed on the side of the negative electrode tab 600 and connected to the electrode assembly 100 will be described for convenience of explanation. However, the description of the insulator 400, which is common with the insulator 300, may be applied to the insulator 300.

The insulator 400 may be formed in a shape corresponding to the cross-section of the jellyroll-type electrode assembly 100. For example, if the cross-section of the jellyroll-type electrode assembly 100 is circular, the shape of the insulator 400 may also be circular. In addition, the insulator 400 has a central opening 410, for example, in a circular shape. In addition, the insulator 300 has a central opening 310, for example, in a circular shape.

The insulator 400 may include, for example, an elastic material. Therefore, when vibration or an external impact is applied to the cylindrical battery cell 10, the insulator 400 may absorb the impact while being compressed by elasticity and then returning to its original state. Accordingly, even if vibration or an external impact is applied to the battery cell, damage to internal components of the battery cell may be minimized.

The insulator 400 may be made of a material having insulating performance. Preferably, the insulator 400 may include an insulating polymer material, but is not limited thereto. For example, the insulator 400 may be made of polyethylene terephthalate (PET), polybutylene terephthalate (PBT), or polypropylene (PP).

The cylindrical battery cell 10 according to the first embodiment of the present disclosure is configured such that at least a part of the negative electrode tab 600 rotates when, for example, the length or shape of the electrode assembly 100 changes, thereby preventing the collapse of the shape of the electrode assembly 100 and a short circuit of the cylindrical battery cell 10.

As described above, if the cylindrical battery cell 10 is repeatedly charged and discharged, the positive electrode plate 110 or the negative electrode plate 120 repeatedly contracts and relaxes, so that the length of the positive electrode plate 110 or the negative electrode plate 120 increases. However, since the electrode assembly 100 is stored inside the cylindrical battery can 200, even if the length of the positive electrode plate 110 or the negative electrode plate 120 increases, it is unable to be deformed outside the battery can 200.

However, if at least a part of the negative electrode tab 600 is configured to rotate, even if the length of the positive electrode plate 110 or the negative electrode plate 120 increases during charging and discharging, the positive electrode plate 110 or the negative electrode plate 120 is not folded toward the center.

That is, in the case of a conventional cylindrical battery cell shown in FIG. 1, even if the positive electrode plate 1 or the negative electrode plate 4 is stretched due to force during charging and discharging, since the negative electrode tab is fixed to the battery can, the positive electrode plate 1 or the negative electrode plate 4 is to be folded toward the center hole of the electrode assembly 1 at a portion on which the force is concentrated.

However, in the cylindrical battery cell 10 according to the first embodiment of the present disclosure, if the positive electrode plate 110 or the negative electrode plate 120 is stretched due to force during charging and discharging, at least a part of the negative electrode tab 600 rotates, instead of being fixed, so that the positive electrode plate 110 or the negative electrode plate 120 is not to be folded toward the center hole 140 of the electrode assembly 100.

That is, the force generated during charging and discharging in the first embodiment of the present disclosure is converted into the rotational force of the negative electrode tab 600, so that the shape of the electrode assembly 100 does not collapse, thereby preventing a short circuit of the cylindrical battery cell 10.

Referring to both FIG. 2 and FIG. 3, the negative electrode tab 600 may be configured to include a first negative electrode tab 610, a second negative electrode tab 620, and a coupling shaft 630.

The first negative electrode tab 610 is fixed to the battery can 200. The first negative electrode tab 610 may be fixed in various ways and may be fixed to the battery can 200, for example, by welding.

The first negative electrode tab 610 may include a horizontal fixing tab 611 and a vertical fixing tab 612.

The horizontal fixing tab 611 is formed in a horizontal direction in the arrangement state of the battery can 200. For example, in the case where the battery can 200 is disposed as shown in FIG. 2, the horizontal fixing tab 611 may be disposed in a left-right direction at the bottom of the battery can 200.

In addition, the vertical fixing tab 612 may extend to be bent from the horizontal fixing tab 611 so as to be positioned between the outermost side of the electrode assembly 100 and the battery can 200. The vertical fixing tab 612 may extend to be bent, for example, vertically from the horizontal fixing tab 611, but is not necessarily limited thereto.

In addition, the first negative electrode tab 610 is coupled to be fixed to at least one of the bottom of the battery can 200 and the side surface of the battery can 200. That is, the horizontal fixing tab 611 may be coupled to the bottom of the battery can 200 by welding or the like, and the vertical fixing tab 612 may be coupled to the side surface of the battery can 200 by welding or the like

The second negative electrode tab 620 is positioned in the center hole 140 of the electrode assembly 100 to be coupled to the electrode assembly 100, and is configured to rotate relative to the first negative electrode tab 610. That is, the second negative electrode tab 620 is configured to rotate about the coupling shaft 630 as a rotation axis.

In addition, since one side of the second negative electrode tab 620 is coupled to the electrode assembly 100, if force is applied to the electrode assembly 100 as the length of at least one of the positive electrode plate 110 and the negative electrode plate 120 increases due to charging and discharging of the cylindrical battery cell 10, the second negative electrode tab 620 rotates by the force.

In addition, as the second negative electrode tab 620 rotates, the force applied to the electrode assembly 100 is converted into the rotational force as described above, thereby preventing the collapse of the shape of the electrode assembly 100.

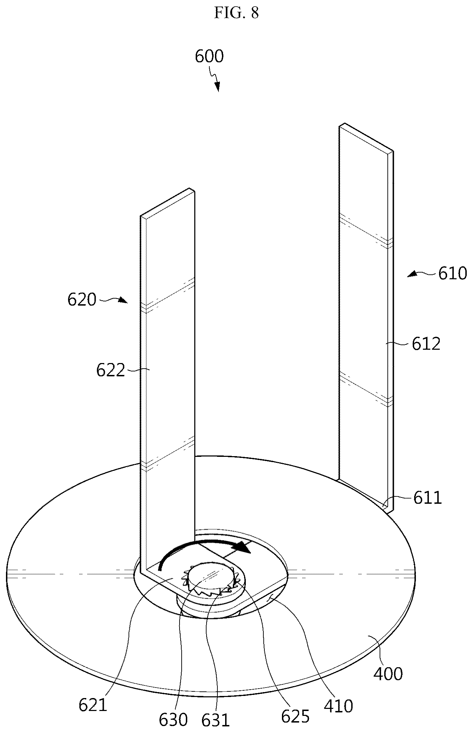

Referring to FIGS. 2 and 3, the second negative electrode tab 620 may be configured to rotate inside the central opening 410 (see FIG. 8 in the second embodiment) of the insulator 400. That is, the diameter of the central opening 410 of the insulator 400 may be formed to be greater than the rotational diameter of the second negative electrode tab 620, so that the second negative electrode tab 620 does not interfere with the insulator 400 when rotating.

The second negative electrode tab may include a horizontal rotation tab 621 and a vertical rotation tab 622.

The horizontal rotation tab 621 is formed in a horizontal direction in the arrangement state of the battery can 200. For example, in the case where the battery can 200 is disposed as shown in FIG. 2, the horizontal rotation tab 621 may be disposed in the left-right direction at the bottom of the battery can 200.

In addition, as the length of at least one of the positive electrode plate 110 and the negative electrode plate 120 increases, the horizontal rotation tab 621 rotates together with the vertical rotation tab 622.

The vertical rotation tab 622 extends to be bent from the horizontal rotation tab 621 and is coupled to the electrode assembly 100 in the center hole 140 of the electrode assembly 100. The vertical rotation tab 622 may extend to be bent, for example, vertically from the horizontal rotation tab 621, but is not necessarily limited thereto.

The vertical rotation tab 622 also rotates together with the horizontal rotation tab 621 as the length of at least one of the positive electrode plate 110 and the negative electrode plate 120 increases.

The coupling shaft 630 is coupled to the first negative electrode tab 610 and the second negative electrode tab 620 such that the second negative electrode tab 620 is able to rotate. In addition, the coupling shaft 630 is fixed to the battery can 200 in various ways. For example, it may be coupled by welding, but is not limited thereto. The coupling shaft 630 functions as a rotation axis for the second negative electrode tab 620.

Referring to FIG. 2, the top cap 700 may be configured to be electrically coupled to the positive electrode tab 500 and electrically insulated from the battery can 200. Therefore, the top cap 700 may function as a positive electrode terminal of the cylindrical battery cell 10. The top cap 700 may be made of conductive metal and configured to cover the top of the battery can 200.

The top cap 700 may be seated on a beading portion 210 formed on the battery can 200 and fixed through the formation of a crimping portion 220. Here, a sealing gasket 230 may be interposed between the top cap 700 and the crimping portion 220 of the battery can 200 to secure the airtightness of the battery can 200 and electrically insulate the battery can 200 from the top cap 700.

The beading portion 210 is formed by pressing the outer circumference of the battery can 200 inward. The beading portion 210 may support the electrode assembly 100, which has a size roughly corresponding to the width of the battery can 200, so that the electrode assembly 100 does not come out through the top of the battery can 200, and may also function as a support on which the top cap 700 is seated. In addition, the beading portion 210 may support the outer surface of the sealing gasket 230.

The crimping portion 220 is provided to extend and bend to the inside of the battery can 200 and wrap and fix the edge of the top cap 700 together with the sealing gasket 230. Here, for example, referring to FIG. 2, the crimping portion 220 may be formed in the upper portion of the battery can 200 in the arrangement state of the battery can 200. In addition, as shown in FIG. 2, the crimping portion 220 may be formed above the beading portion 210. However, this is only an embodiment, and the positions of the crimping portion 220 and the beading portion 210 are not limited thereto.

In addition, the present disclosure does not exclude a case where the battery can 200 does not have at least one of the beading portion 210 and the crimping portion 220. In the present disclosure, if the battery can 200 does not have at least one of the beading portion 210 and the crimping portion 220, the fixing of the electrode assembly 100, the fixing of the top cap 700, or the sealing of the battery can 200 may be realized by at least one of additional application of a component that may function as a stopper for the electrode assembly 100, additional application of a structure on which the top cap 700 is able to be seated, and welding between the battery can 200 and the top cap 700.

In FIG. 2, the crimping portion 220 is formed above the beading portion 210. The crimping portion 220 is configured to extend and bend so as to surround the edge of the top cap 700 disposed on the beading portion 210. The top cap 700 is fixed onto the beading portion 210 by the bent shape of the crimping portion 220.

Although not shown in the drawings of this specification, a vent notch (not shown) may be formed to cause the top cap 700 to break when the pressure inside the battery can 200 exceeds a threshold.

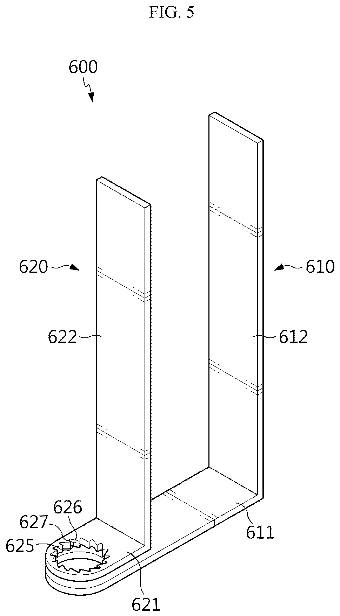

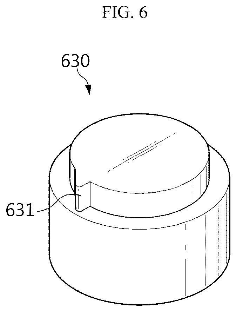

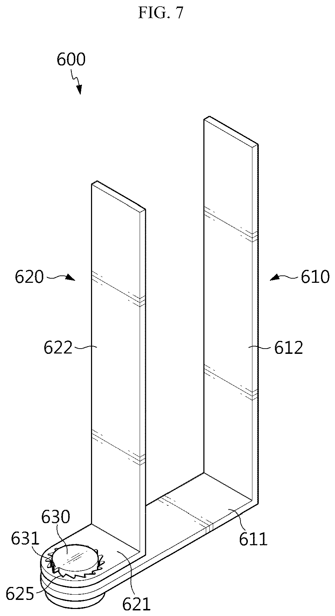

FIG. 5 is a schematically perspective view of a first negative electrode tab and a second negative electrode tab of a negative electrode tab in a cylindrical battery cell according to a second embodiment of the present disclosure, FIG. 6 is a schematically perspective view of a coupling shaft of a negative electrode tab in a cylindrical battery cell according to a second embodiment of the present disclosure, FIG. 7 is a schematically perspective view of a coupling shaft coupled to a first negative electrode tab and a second negative electrode tab of a negative electrode tab in a cylindrical battery cell according to a second embodiment of the present disclosure, and FIG. 8 is a drawing illustrating the state in which a second negative electrode tab of a negative electrode tab rotates relative to a first negative electrode tab inside a central opening of an insulator in a cylindrical battery cell according to a second embodiment of the present disclosure.

The second embodiment of the present disclosure is different in configuration from the first embodiment in that an inner groove 625 is formed in the second negative electrode tab 620 and in that an outer protrusion 631 is formed in the coupling shaft 630. Here, for the same configuration, the description of the first embodiment may also be applied to this embodiment. In addition, the description of the second embodiment, which is applicable to the first embodiment, may be applied to the first embodiment.

Referring to FIG. 5, an inner groove 625 is formed on the inner side of the second negative electrode tab 620. Here, the inner groove 625 may be formed in various ways.

For example, the inner groove 625 may include a first line 626 and a second line 627. The first line 626 is formed to be inclined from an arbitrary point. In addition, the second line 627 is formed to be inclined toward the first line 626 from an opposite point of the arbitrary point so as to meet the first line 626.

Here, the inclined angle of the first line 626 and the inclined angle of the second line 627 may be formed differently from each other.

Alternatively, the length of the first line 626 and the length of the second line 627 may be formed differently from each other.

Referring to FIG. 6, an outer protrusion 631 may be formed on the outer surface of the coupling shaft 630. Although FIG. 6 shows only one outer protrusion 631 formed, a plurality of outer protrusions 631 may be provided.

Referring to FIG. 7, the outer protrusion 631 is configured to come into contact with the inner groove 625 and move in only one direction along the inner groove 625.

That is, referring to both FIG. 7 and FIG. 8, the outer protrusion 631 formed on the outer surface of the coupling shaft 630 moves in only one direction along the inner groove 625 formed on the inner side of the second negative electrode tab 620 and is unable to move in the opposite direction.

As the length of at least one of the positive electrode plate 110 and the negative electrode plate 120 increases due to charging and discharging of the cylindrical battery cell 10, the second negative electrode tab 620 rotates in only one direction, thereby preventing the collapse of the shape of the electrode assembly 100 and a short circuit of the cylindrical battery cell 10.

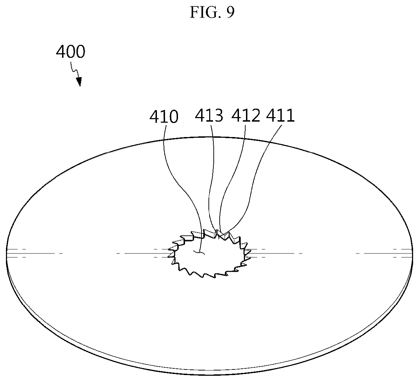

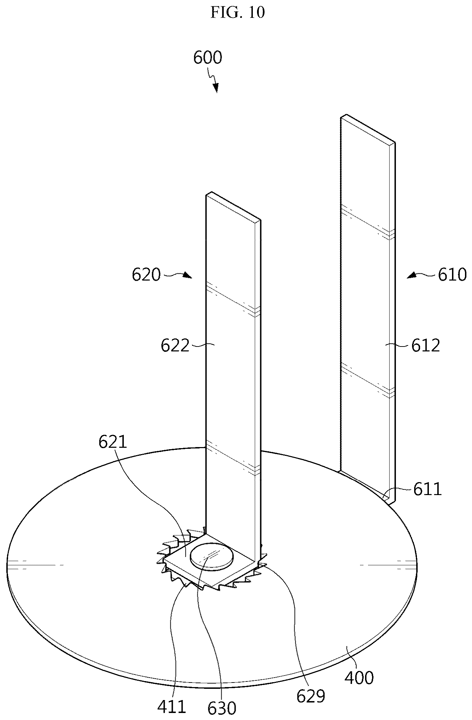

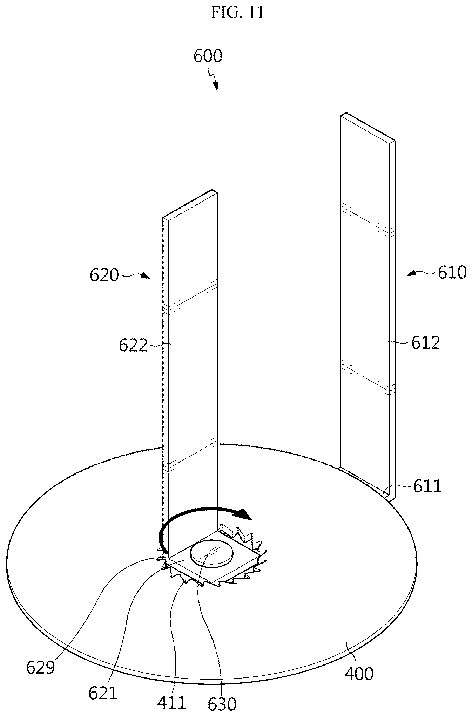

FIG. 9 is a drawing illustrating an insulator having an inner groove formed in a central opening of a cylindrical battery cell according to a third embodiment of the present disclosure, FIG. 10 is a schematically perspective view illustrating the state in which a negative electrode tab is coupled to an inner groove of a central opening of an insulator in a cylindrical battery cell according to a third embodiment of the present disclosure, and FIG. 11 is a drawing illustrating the state in which a second negative electrode tab rotates relative to a first negative electrode tab in the negative electrode tab in FIG. 10.

The third embodiment of the present disclosure is different in configuration from the first embodiment or the second embodiment in that an inner groove 411 is formed in an insulator 400. Here, for the same configuration, the description of the first embodiment or the second embodiment may also be applied to this embodiment. In addition, the description of the third embodiment, which is applicable to the first embodiment or the second embodiment, may be applied to the first embodiment or the second embodiment.

Referring to FIG. 9, an inner groove 411 is formed on the inner side of a central opening 410 of an insulator 400. Here, the inner groove 411 may be formed in various ways.

For example, the inner groove 411 may include a first line 412 and a second line 413. The first line 412 is formed to be inclined from an arbitrary point. In addition, the second line 413 is formed to be inclined toward the first line 412 from an opposite point of the arbitrary point so as to meet the first line 412.

Here, the inclined angle of the first line 412 and the inclined angle of the second line 413 may be formed differently from each other.

Alternatively, the length of the first line 412 and the length of the second line 413 may be formed differently from each other.

Referring to FIG. 10, the second negative electrode tab 620 is configured to come into contact with the inner groove 411 and move in only one direction along the inner groove 411. That is, the side surface of the horizontal rotation tab 621 of the second negative electrode tab 620 is configured to rotate while being caught by the inner groove 411 of the central opening 410 of the insulator 400. To this end, an angled portion 629 such as a corner is formed on at least one side of the horizontal rotation tab 621 of the second negative electrode tab 620 so as to be caught by the inner groove 411 of the insulator 400.

In addition, the angled portion 629 of the horizontal rotation tab 621 of the second negative electrode tab 620 is formed to come into contact with the inner groove 411 of the central opening 410 of the insulator 400 and move in only one direction along the inner groove 411.

That is, the angled portion 629 of the horizontal rotation tab 621 of the second negative electrode tab 620 moves in only one direction along the inner groove 411 formed on the inner side of the central opening 410 of the insulator 400 and is unable to move in the opposite direction.

Accordingly, as the length of at least one of the positive electrode plate 110 and the negative electrode plate 120 increases due to charging and discharging of the cylindrical battery cell 10, the second negative electrode tab 620 rotates in only one direction, thereby preventing the collapse of the shape of the electrode assembly 100 and a short circuit of the cylindrical battery cell 10.

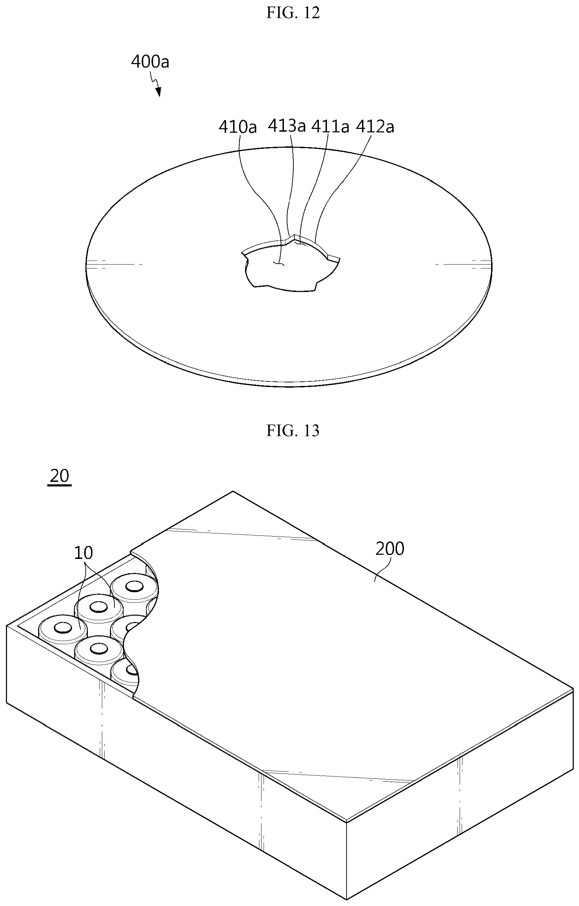

FIG. 12 is a drawing illustrating an insulator according to a modified embodiment of the insulator in FIG. 9.

Referring to FIG. 12, an insulator 400a according to a modified embodiment has a first line 412a that is longer than that in FIG. 9. That is, the length of the first line 412a of an inner groove 411a of an insulator 400a in FIG. 12 is greater than the length of the first line 412 of the inner groove 411 of the insulator 400 in FIG. 9. Accordingly, there is also a difference in the number of inner grooves 411 and 411a. FIG. 12 is a modified embodiment of FIG. 9, and there may be various modifications of the embodiment in FIG. 9.

FIG. 13 is a drawing schematically illustrating the configuration of a battery pack including the cylindrical battery cell according to each embodiment of the present disclosure.

Referring to FIG. 13, a battery pack 20 according to an embodiment of the present disclosure may include one or more cylindrical battery cells 10 according to each embodiment of the present disclosure described above. In addition, the battery pack 20 may further include a pack housing 200 for storing the cylindrical battery cell 10, and various devices for controlling charging and discharging of the cylindrical battery cell 10, such as a BMS, a current sensor, a fuse, or the like

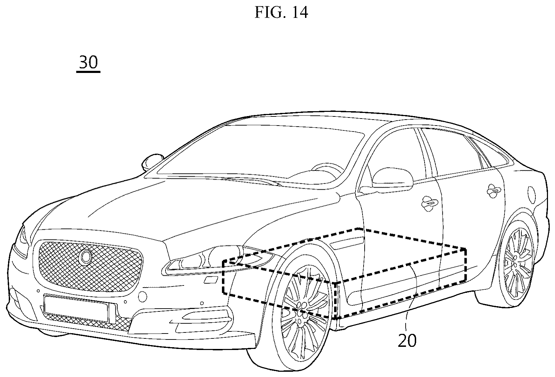

FIG. 14 is a drawing illustrating a vehicle including a battery pack according to each embodiment of the present disclosure.

Referring to FIG. 14, a vehicle 30 according to an embodiment of the present disclosure may include one or more cylindrical battery cells 10 or battery packs 20 according to each of the above-described embodiments. Here, the vehicle 30 includes various vehicles that are designed to use electricity, such as an electric vehicle or a hybrid vehicle.

Although terms indicating directions such as up, down, left, and right directions are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains. Therefore, the previously disclosed embodiments should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

### Industrial Applicability

The present disclosure relates to a cylindrical battery cell, and a battery pack and a vehicle including, and it is particularly applicable to industries related to secondary batteries.

## Claims

1. A cylindrical battery cell comprising:
an electrode assembly having a structure in which a positive electrode plate provided with a positive electrode tab, a negative electrode plate provided with a negative electrode tab, and a separator interposed between the positive electrode plate and the negative electrode plate are wound in one direction, and having a center hole formed therein;
a cylindrical battery can configured to store the electrode assembly with an electrolyte injected thereinto; and
an insulator having a central opening formed therein and disposed on a side of the negative electrode tab so as to be coupled to the electrode assembly,
wherein at least a part of the negative electrode tab is configured to rotate according to a change in the electrode assembly during charging and discharging.

2. The cylindrical battery cell according to claim 1,
wherein the negative electrode tab comprises:
a first negative electrode tab fixed to the battery can;
a second negative electrode tab positioned in the center hole of the electrode assembly, coupled to the electrode assembly, and configured to rotate relative to the first negative electrode tab; and
a coupling shaft coupled to the first negative electrode tab and the second negative electrode tab so that the second negative electrode tab is rotatable.

3. The cylindrical battery cell according to claim 2,
wherein the second negative electrode tab rotates inside the central opening of the insulator.

4. The cylindrical battery cell according to claim 2,
wherein the second negative electrode tab rotates as a length of at least one of the positive electrode plate and the negative electrode plate increases due to charging and discharging.

5. The cylindrical battery cell according to claim 2,
wherein the first negative electrode tab comprises:
a horizontal fixing tab formed in a horizontal direction, based on an arrangement state of the battery can; and
a vertical fixing tab configured to extend to be bent from the horizontal fixing tab and positioned between an outermost side of the electrode assembly and the battery can.

6. The cylindrical battery cell according to claim 2,
wherein the second negative electrode tab comprises:
a horizontal rotation tab formed in a horizontal direction, based on an arrangement state of the battery can; and
a vertical rotation tab configured to extend to be bent from the horizontal rotation tab and is coupled to the electrode assembly in the center hole of the electrode assembly.

7. The cylindrical battery cell according to claim 2,
wherein an inner groove is formed on an inner side of the second negative electrode tab, and
wherein an outer protrusion is formed on an outer surface of the coupling shaft so as to come into contact with the inner groove and move in only one direction along the inner groove.

8. The cylindrical battery cell according to claim 7,
wherein the inner groove comprises:
a first line formed to be inclined from an arbitrary point; and
a second line formed to be inclined toward the first line from an opposite point of the arbitrary point so as to meet the first line,
wherein an inclined angle of the first line and an inclined angle of the second line are different from each other.

9. The cylindrical battery cell according to claim 7,
wherein the inner groove comprises:
a first line formed to be inclined from an arbitrary point; and
a second line formed to be inclined toward the first line from an opposite point of the arbitrary point so as to meet the first line,
wherein a length of the first line and a length of the second line are different from each other.

10. The cylindrical battery cell according to claim 1,
wherein an inner groove is formed on an inner side of the central opening of the insulator, and
wherein the second negative electrode tab is configured to come into contact with the inner groove and move in only one direction along the inner groove.

11. The cylindrical battery cell according to claim 10,
wherein the inner groove comprises:
a first line formed to be inclined from an arbitrary point; and
a second line formed to be inclined toward the first line from an opposite point of the arbitrary point so as to meet the first line,
wherein an inclined angle of the first line and an inclined angle of the second line are different from each other.

12. The cylindrical battery cell according to claim 10,
wherein the inner groove comprises:
a first line formed to be inclined from an arbitrary point; and
a second line formed to be inclined toward the first line from an opposite point of the arbitrary point so as to meet the first line,
wherein a length of the first line and a length of the second line are different from each other.

13. A battery pack comprising at least one cylindrical battery cell according to any one of claims 1 to 12.

14. A vehicle comprising at least one cylindrical battery cell according to any one of claims 1 to 12.
